# EUROPEAN PATENT APPLICATION

(11) **EP 3 025 574 A1**
(43) Date of publication of application: **01.06.2016**
(21) Application number: 15195783.4
(22) Date of filing: 23.11.2015
(51) Int. Cl.: A01D 34/81, A01D 43/063

(54) **MOWING MACHINE**

(30) Priority: 28.11.2014 JP 2014241253
(71) Applicant: Iseki & Co., Ltd., Matsuyama-shi, Ehime 799-2692 (JP)
(72) Inventor: MATSUGI, Satoshi, Iyo-gun, Ehime 791-2193 (JP); KURITA, Kazuyuki, Iyo-gun, Ehime 791-2193 (JP); ENOMOTO, Wakao, Iyo-gun, Ehime 791-2193 (JP)
(74) Representative: TBK

(57) **Abstract**

[Problem] To sufficiently ensure the capacity of a grass accommodation unit.

[Means for Resolution] Since an accommodation unit 14 is provided with a concave portion 50 and a rear bottom surface 14b is disposed at the downside in relation to a front bottom surface 14a, the capacity of the accommodation unit 14 can be ensured while avoiding a radiator 13

protruding upwardly. Further, since the rear portion of the accommodation unit 14 is provided with a door 81 opened and closed to eject grasses therethrough and the rear bottom surface 14b is disposed at the downside in relation to the front bottom surface 14a, grasses can be satisfactorily ejected from the rear portion of the accommodation unit 14 toward the front portion thereof when the grasses are ejected.

## Description

### [Technical Field]

The present invention relates to a mowing machine.

### [Background Art]

Among mowing machines, there is known a mowing machine in which an engine and a radiator are disposed at a rear portion of a vehicle body frame and a bottom portion of a collector bag is recessed upwardly so as to match the radiator (Patent Document 1).

### [Prior Art Document]

### [Patent Document]

[Patent Document 1] JP-A-2006-325555

### [Disclosure of the Invention]

### [Problem that the Invention is to Solve]

In the shape in which the bottom portion of the collector bag is recessed upwardly as in the technique disclosed in Patent Document 1, the capacity of the collector bag decreases by the recessed amount. Thus, a problem arises in that the capacity cannot be ensured sufficiently.

Here, an object of the invention is to sufficiently ensure the capacity of a grass accommodation unit.

### [Means for Solving the Problems]

The object of the invention is solved by the following means.

That is, according to the invention of claim 1, provided is a mowing machine including: a traveling vehicle body (2); a mowing unit (6) disposed at the front portion of the traveling vehicle body (2); an accommodation unit (14) accommodating therein grasses mown by the mowing unit (6); an engine (12) disposed at the rear portion of the traveling vehicle body (2); and a radiator (13) disposed at the front side of the engine (12), wherein the radiator (13) is disposed so that the upper portion protrudes upwardly in relation to the engine, wherein the rear bottom portion of the accommodation unit (14) is located above the engine, and wherein the front bottom portion of the accommodation unit (14) is provided with a concave portion (50) allowing the upper portion of the radiator (13) to be received thereinto.

According to the invention of claim 2, provided is the mowing machine according to claim 1, further including: a pair of first left and right frames (202) facing the bottom portion of the accommodation unit (14) and extending in the front to back direction at both left and right sides of the bottom portion of the accommodation unit; a second frame (203) facing the bottom portion of the accommodation unit (14) and extending in the left and right direction at the rear bottom portion of the accommodation unit so as to be connected to the first frames (202); and a third frame (204) facing the bottom portion of the accommodation unit (14) and extending in the left and right direction along the shape of the concave portion (50) forming the front bottom portion of the accommodation unit so as to be connected to the first frames (202).

According to the invention of claim 3, provided is the mowing machine according to claim 1 or 2, wherein a cube-shaped dust net (13c) is provided at the front side of the radiator (13) so as to have substantially the same height as the upper portion of the radiator (13), wherein the concave portion (50) is formed to the front end of the accommodation unit (14), and wherein the upper portions of the radiator (13) and the cube-shaped dust net (13c) are received into the concave portion (50).

### [Advantage of the Invention]

According to the invention of claim 1, since the accommodation unit (14) is provided with the concave portion (50) and a rear bottom surface (14b) is disposed at the downside in relation to a front bottom surface (14a), the capacity of the accommodation unit (14) can be ensured while avoiding the radiator (13) protruding upwardly. Further, since the rear bottom surface (14b) is disposed at the downside in relation to the front bottom surface (14a), grasses can be ejected from the front portion of the accommodation unit (14) toward the rear portion thereof when the grasses are ejected.

According to the invention of claim 2, the strength can be ensured by satisfactorily supporting the accommodation unit (14) in all directions by the first frames (202), the second frame (203), and the third frame (204) in addition to the effect of the invention of claim 1.

According to the invention of claim 3, the suctioning capability of the radiator (13) can be ensured by disposing the cube-shaped dust net (13c) at the front side of the radiator (13) in addition to the effect of the invention of claim 1 or claim 2. Further, since the concave portion (50) is formed to the front end of the accommodation unit (14), it is possible to prevent a space that disturbs the sufficient ejection of grasses from being formed.

### [Brief Description of the Drawings]

[Fig. 1] Fig. 1 is a side view of a riding grass mowing machine as an example of a mowing machine of the embodiment.
[Fig. 2] Fig. 2 is a top view of a power transmission configuration of the riding grass mowing machine of the embodiment.
[Fig. 3] Fig. 3 is a diagram illustrating a state where a collector moves upwardly in the riding grass mowing machine of the embodiment.
[Fig. 4] Fig. 4 is a diagram illustrating a state where the collector rotates in the riding grass mowing machine of the embodiment.
[Fig. 5] Fig. 5 is a diagram illustrating an engine and a radiator of the embodiment, where Fig. 5(A) is a diagram illustrating a state where a hood is attached and Fig. 5(B) is a diagram illustrating a state where the hood is separated.
[Fig. 6] Fig. 6 is a diagram illustrating an arrangement relation between the collector and the engine when viewed from the rear side of a vehicle body of the embodiment.
[Fig. 7] Fig. 7 is a perspective view illustrating the collector of the embodiment when viewed from the front diagonal downside.
[Fig. 8] Fig. 8 is a perspective view of the inside of the collector of the embodiment.
[Fig. 9] Fig. 9 is a cross-sectional view of a main part of the collector of the embodiment.
[Fig. 10] Fig. 10 is a diagram illustrating a front end of the collector of the embodiment.
[Fig. 11] Fig. 11 is a diagram illustrating a state where a cover is opened in addition to the state shown in Fig. 10.
[Fig. 12] Fig. 12 is a perspective view of an eject tube and a scattering member of the embodiment.
[Fig. 13] Fig. 13 is a diagram illustrating a motor lock prevention mechanism of the embodiment, where Fig. 13(A) is an exploded diagram,
Fig. 13(B) is a diagram illustrating a state where the scattering member is not stopped, and Fig. 13(C) is a diagram illustrating a state where the scattering member is stopped.
[Fig. 14] Fig. 14 is a diagram illustrating a door of the collector of the embodiment.
[Fig. 15] Fig. 15 is a diagram illustrating a case where grasses accommodated in the collector of the embodiment are ejected to a cargo of a truck.
[Fig. 16] Fig. 16 is a diagram illustrating a lock mechanism of the door of the collector of the embodiment.
[Fig. 17] Fig. 17 is a diagram when viewed from the arrow XVII of Fig. 16.
[Fig. 18] Fig. 18 is a diagram illustrating a door grip of the embodiment, where Fig. 18(A) is a front view, Fig. 18(B) is a cross-sectional view, Fig. 18(C) is a cross-sectional view of another example, and Fig. 18(D) is a diagram illustrating a grip of the related art.
[Fig. 19] Fig. 19 is a diagram illustrating a main part of a connection portion between a duct and a connection port of the embodiment.
[Fig. 20] Fig. 20 is a diagram illustrating a main part of another example of the connection portion between the duct and the connection port of the embodiment.
[Fig. 21] Fig. 21 is an enlarged view of a main part of an elevation mechanism of the collector of the embodiment.
[Fig. 22] Fig. 22 is a diagram illustrating another example of the embodiment for the door of the collector corresponding to Fig. 15, where
Fig. 22(A) is a diagram illustrating a state where the door is closed, Fig. 22(B) is a diagram illustrating a state where the door is opened, and Fig. 22(C) is a diagram illustrating a drawing rod.

### [Mode for Carrying Out the Invention]

Hereinafter, a preferred embodiment of the invention will be described based on the drawings.

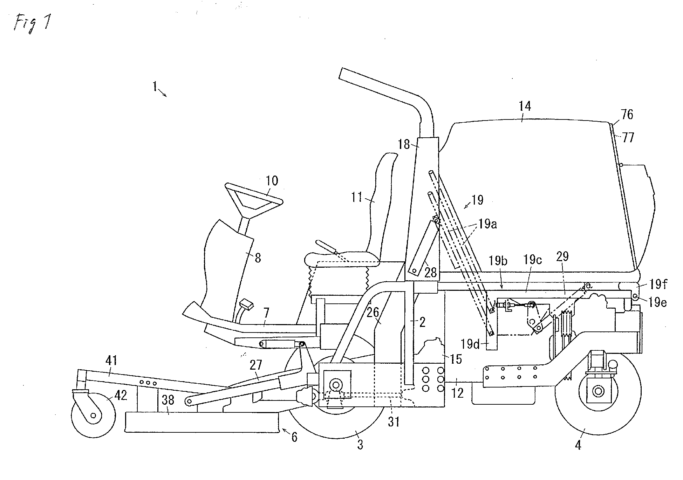

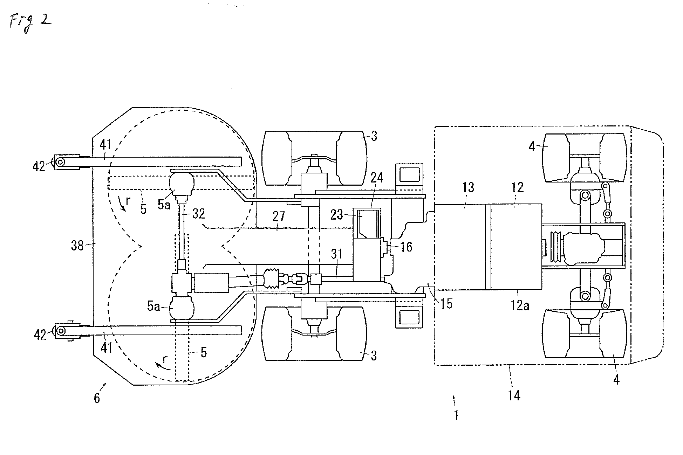

Fig. 1 is a side view of a riding grass mowing machine 1 as an example of a mowing machine of the embodiment, and Fig. 2 is a top view of a power transmission configuration of the riding grass mowing machine. Front wheels 3 and 3 and rear wheels 4 and 4 are respectively provided at the front and rear portions of a vehicle body frame 2 as an example of a traveling vehicle body, and a mower 6 including grass cutting blades 5 and 5 is provided below the front portion of the vehicle body frame 2. A mowing unit of the embodiment includes the mower 6. A steering column 8 rises in a front upper floor 7 of the vehicle body frame 2, and the upper portion of the column 8 is provided with a handle 10. Further, a seat 11 is provided at the rear side of the handle 10, and an engine 12 is mounted at the rear side of the seat 11. A collector 14 as an example of an accommodation unit is provided above the engine 12.

Further, in the specification, the left and right direction of the riding grass mowing machine 1 moving forwardly will be respectively set as the left side and the right side, the forward movement direction will be set as the front side, and the backward movement direction will be set as the rear side.

The output of the engine 12 is input to a transmission (not shown) inside a front transmission casing 15. Then, the rotation power of the engine 12 is changed in speed by the transmission, and the changed travel power is transmitted to the front wheels 3 and 3 and the rear wheels 4 and 4.

Further, a transmission shaft 16 (Fig. 2) extends toward the front upper side of the transmission casing 15, and a blower 23 as an example of a grass carrying member is driven by the power transmitted from the transmission shaft 16. The blower 23 is accommodated in a blower casing 24, and the upper portion of the blower casing 24 is provided with a grass carrying duct 26 communicating the blower casing 24 and the collector 14. Further, a chute 27 is disposed between the blower 23 and the mower 6, and the grasses mowed by the mower 6 are carried to the rear collector 14 through the chute 27 and the duct 26 by the blower 23. A ventilation port (not shown) is formed in the collector 14 so that air fed into the collector 14 can be ejected to the outside.

Further, a pair of support columns 18 and 18 rises at the rear side of the seat 11. A collector elevation mechanism 19 is supported by the support columns 18 and 18. The collector elevation mechanism 19 includes a pair of collector elevation links 19a and 19a of which the base ends are rotatably supported by the support columns 18 and 18. The front ends of the collector elevation links 19a and 19a are connected to an elevation seat 19b disposed below the collector 14.

Further, a telescopic elevation cylinder 28 is connected between the base end of the lower collector elevation link 19a and the lower end of the support column 18.

The elevation seat 19b includes a horizontal portion 19c which extends in the front and back direction along the bottom portion of the collector 14 and a vertical portion 19d which extends downwardly from the front end of the horizontal portion 19c. Further, the rear ends of the pair of left and right horizontal portions 19c are connected to each other by a connection bar (not shown) extending in the left and right direction. The front ends of the collector elevation links 19a and 19a are rotatably supported by the vertical portion 19d.

A base end of a rotation arm 19f is supported on the upper side of the horizontal portion 19c so as to be rotatable about a rotation shaft 19e of the rear end of the horizontal portion 19c. A telescopic rotation cylinder 29 is connected between the front end of the rotation arm 19f and the lower end of the vertical portion 19d. The bottom portion of the collector 14 is fixed and supported to the rotation arm 19f.

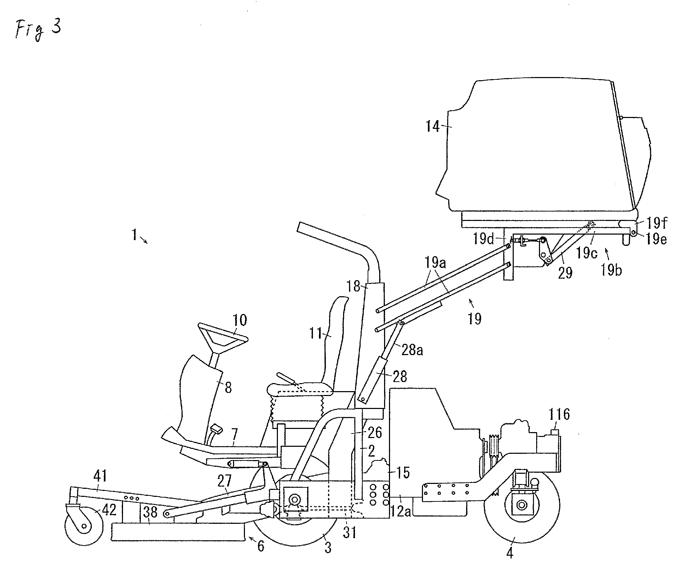

Fig. 3 is a diagram illustrating a state where the collector moves upwardly in the riding grass mowing machine 1 of the embodiment.

In the collector elevation mechanism 19 of the embodiment shown in Figs. 1 and 3, when the elevation cylinder 28 is operated so as to lengthen a rod 28a, the collector elevation links 19a and 19a rotate to move the elevation seat 19b upwardly. At this time, the elevation seat 19b and the collector 14 are moved upwardly in the horizontal state due to the parallel link structure of the collector elevation links 19a and 19a so as to move to an ascending position (a lift position) shown in Fig. 3. Further, when the rod 28a of the elevation cylinder 28 is accommodated, the collector 14 moves downwardly so as to return to a normal position (an accommodation position) shown in Fig. 1.

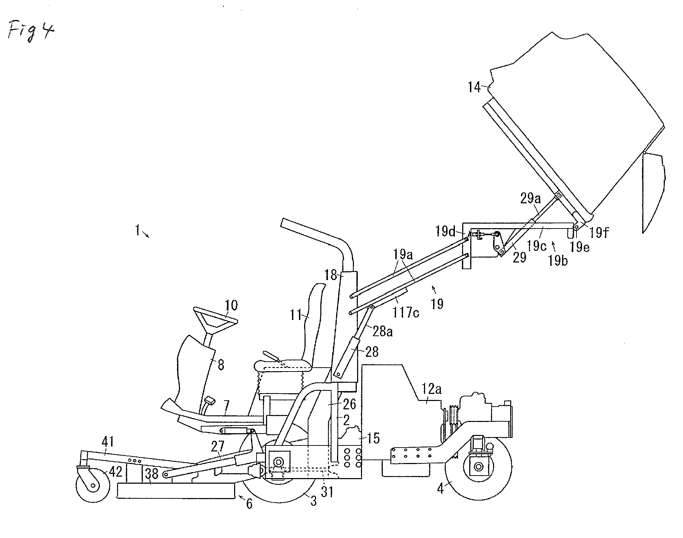

Fig. 4 is a diagram illustrating a state where the collector rotates in the riding grass mowing machine 1 of the embodiment.

In Figs. 3 and 4, when the rotation cylinder 29 is operated so as to extend a rod 29a, the rotation arm 19f rotates about the rotation shaft 19e relative to the horizontal portion 19c. In accordance with this movement, the collector 14 fixed to the rotation arm 19f also rotates. Thus, the collector 14 moves to an eject position (a dump position) in which the grasses accommodated in the collector 14 can be ejected to the outside. Further, when the rod 29a of the rotation cylinder 29 is accommodated, the collector 14 returns to the state shown in Fig. 3.

The driving rotation power of the engine 12 is transmitted to rotation shafts 5a and 5a of the cutting blades 5 and 5 through a mower drive shaft 31 extending forwardly from the transmission casing 15 or a mower transmission shaft 32 extending in the left and right direction from the front end of the mower drive shaft 31. In the embodiment, the pair of left and right cutting blades 5 and 5 rotates in the opposite directions indicated by the arrow r.

In this way, grasses entering into a mower deck 38 are mowed by the pair of cutting blades 5 and 5, gathering to the center in the left and right direction, subsequently passing through the chute 27 and the duct 26, and are collected in the collector 14 located at the rear side of the vehicle body frame 2.

A base end of an auxiliary wheel arm 41 extending forwardly is supported by the upper portion of the mower deck 38, and an auxiliary wheel 42 is rotatably supported by the front end of the auxiliary wheel arm 41.

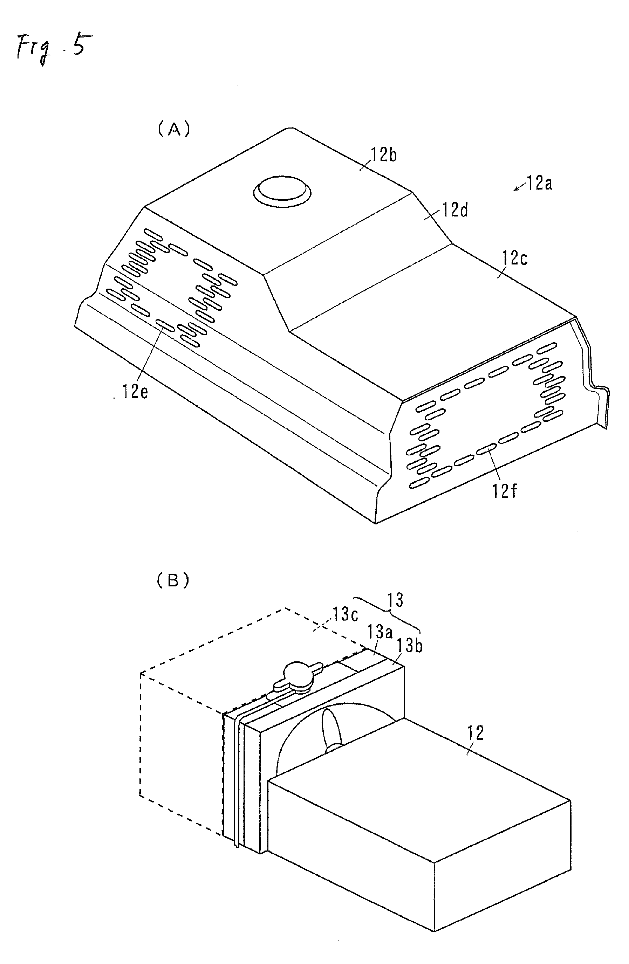

Fig. 5 is a diagram illustrating the engine and the radiator of the embodiment, where Fig. 5(A) is a diagram illustrating a state where a hood is attached and Fig. 5(B) is a diagram illustrating a state where the hood is separated.

In the riding grass mowing machine 1 of the embodiment shown in Fig. 5(B), a radiator 13 as an example of a cooler for the engine is disposed at the front side of the engine 12. The upper end of the radiator 13 of the embodiment protrudes upwardly in relation to the upper surface of the engine 12.

The radiator 13 includes a front radiator body 13a. A radiator shroud 13b is supported at the rear side of the radiator body 13a. The radiator shroud 13b blows a gas backwardly so as to cool the radiator body 13a. A cube-shaped dust net 13c as an example of a dust suction regulation member is supported at the front side of the radiator body 13a. The inside of the cube-shaped dust net 13c of the embodiment is formed as a hollow cube-shaped (box-shaped) net. Further, the cube-shaped dust net 13c is formed as a net having a mesh size which prohibits the entrance of the grasses toward the front surface side of the radiator body 13a and allows the intake of air. Further, the cube-shaped dust net 13c of the embodiment is formed so as to be longer than the radiator body 13a in the front to back direction. Thus, the cube-shaped dust net 13c of the embodiment is formed so as to be sufficiently larger than the radiator body 13a. Accordingly, even when some grasses are stuck to the cube-shaped dust net 13c, the suctioning capability can be ensured by the radiator shroud 13b. Thus, the cooling capability of the radiator 13 for the engine 12 can be maintained for a long period of time.

In Fig. 5(A), the engine 12 and the radiator 13 are accommodated inside the hood 12a. Thus, the hood 12a is formed so that a front upper surface 12b is disposed at a higher position than a rear upper surface 12c along the shapes of the upper ends of the radiator 13 and the engine 12, and the surfaces 12b and 12c are connected to each other by a slope 12d. Further, a plurality of intake holes 12e are formed in the front surface of the front portion and the side surfaces of the hood 12a of the embodiment, and a plurality of exhaust holes 12f are formed in the rear surface of the rear portion. Thus, a step is formed between the surfaces 12b and 12c of the hood 12a of the embodiment according to the height of the engine 12 or the radiator 13, and hence the volume of the upwardly protruding portion can be decreased, as compared with a case where the surfaces are formed as flat surfaces according to the height of the radiator 13. Thus, since the capacity of the collector 14 can be increased and the position of the bottom surface of the collector 14 can be moved downwardly, the gravity center of the entire riding grass mowing machine 1 can be moved downwardly.

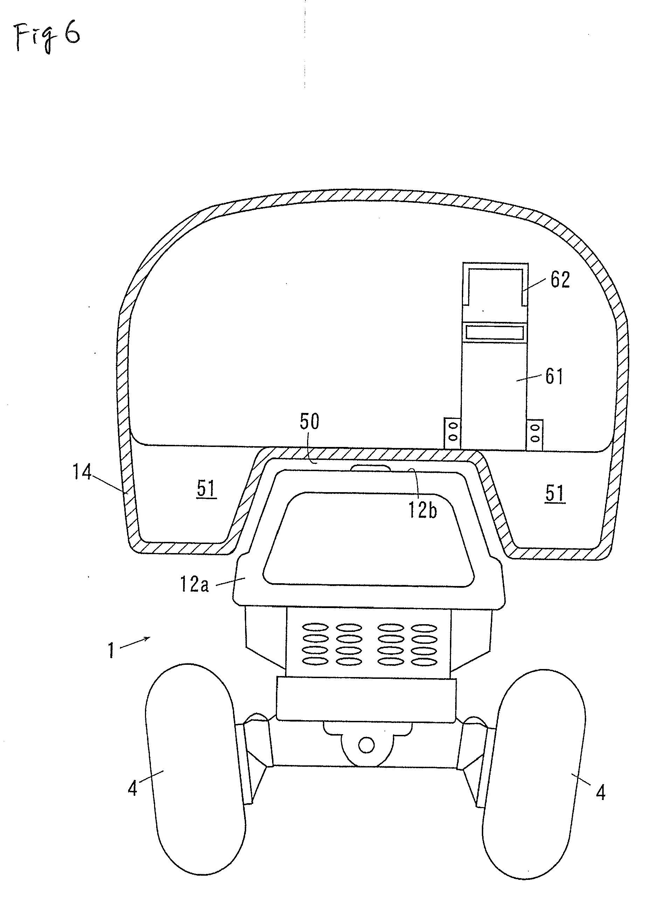

Fig. 6 is a diagram illustrating an arrangement relation between the collector and the engine when viewed from the rear side of the vehicle body.

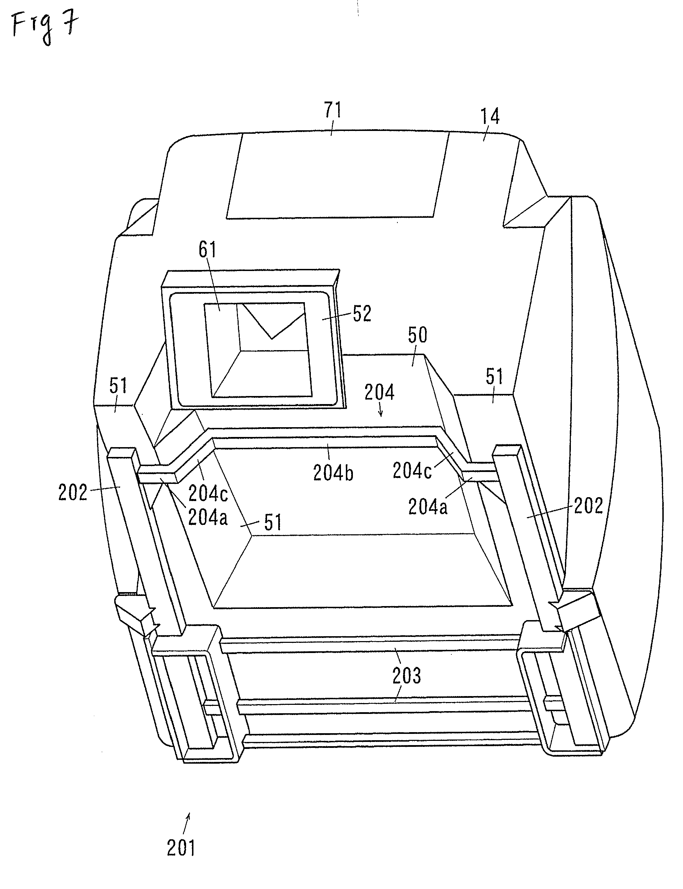

Fig. 7 is a perspective view illustrating the collector of the embodiment when viewed from the front diagonal downside.

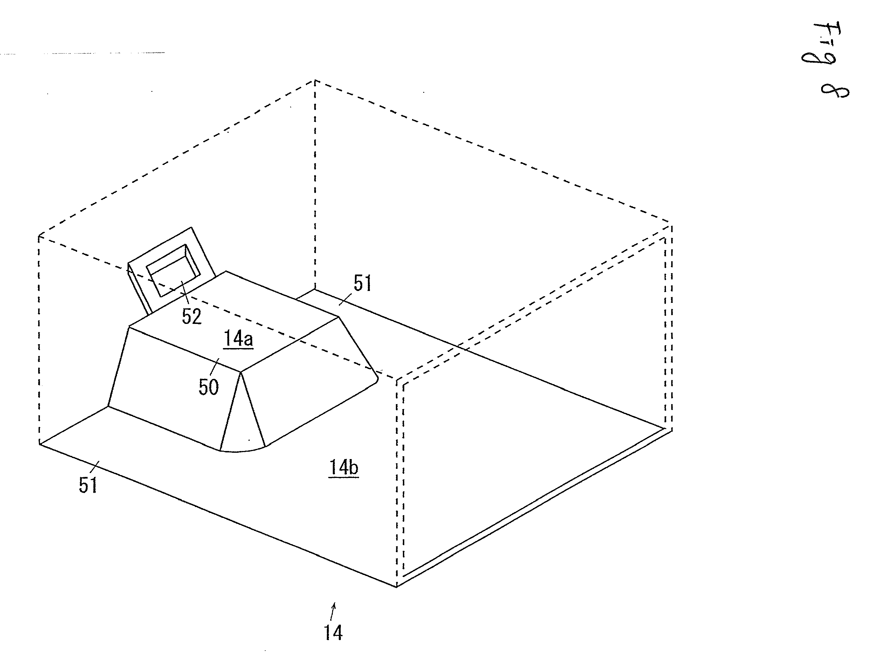

Fig. 8 is a perspective view of the inside of the collector of the embodiment.

In Fig. 6, the collector 14 of the embodiment is disposed above the hood 12a. The collector 14 of the embodiment is formed as an integrated resinous product by rotational molding. In Figs. 6 to 8, the collector 14 has a bottom shape corresponding to the shape of the hood 12a. Thus, the bottom surface of the collector 14 is provided with a concave portion 50 recessed upwardly in response to the front upper surface 12b of the hood 12a. Thus, a front bottom surface 14a of the collector 14 corresponding to the concave portion 50 is disposed at the upside in the gravity direction in relation to a rear bottom surface 14b of the collector 14 corresponding to the upside of the engine 12. Thus, the front bottom surface 14a and the rear bottom surface 14b are formed in a step shape. In addition, a predetermined gap (a clearance) is formed between the bottom surface of the collector 14 and the upper surface of the hood 12a in accordance with the shapes of the bottom surfaces 14a and 14b of the collector 14.

Further, the concave portion 50 extends to the front end of the collector 14. Further, the concave portion 50 is formed at the center portion in the vehicle width direction. Thus, end accommodation units 51 provided at both ends of the collector in the vehicle width direction extend downwardly in relation to the concave portion 50. Accordingly, the front portion of the collector 14 has a door shape surrounding the upside and both left and right sides of the hood 12a covering the engine 12.

Thus, the capacity of the collector 14 accommodating grasses can be increased, as compared with a case where the end accommodation unit 51 extending downwardly is not provided. Particularly, in the embodiment, the concave portion 50 is formed at the front portion of the collector 14, while is not formed at the rear portion thereof. Thus, the capacity of the collector 14 can be increased, as compared with the configuration in which the concave portion 50 is formed to the rear portion.

Further, in the embodiment, the rear bottom surface 14b is formed so as to be lower than the front bottom surface 14a in the gravity direction. If the rear portion is located at the upside in the gravity direction when the grasses are ejected while rotating the collector 14, there is a concern that a part of the grasses at the front portion may not be ejected. However, in the embodiment, the grasses can be ejected without clogging the front portion with the grasses.

Further, since the front bottom surface 14a or the end accommodation units 51 are disposed so as to surround the hood 12a, the gravity center of the entire riding grass mowing machine 1 can be moved downwardly. Thus, the traveling performance on a slope or the like can be improved due to the downwardly moved gravity center of the riding grass mowing machine 1.

Additionally, in the embodiment, the concave portion 50 is not visible due to the end accommodation units 51 when the collector 14 is viewed from the outside, and hence the collector looks larger than the actual capacity thereof. Thus, there is also an advantage in design.

Further, if the concave portion 50 is not formed to the front end, a space similar to the end accommodation unit 51 is formed at the front end of the collector 14. When the grasses enter this space, there is a concern that the grasses cannot be ejected sufficiently due to the step with respect to the concave portion even when the collector 14 is rotated to eject the grasses. On the contrary, in the embodiment, the concave portion 50 is formed to the front end of the collector 14. Thus, forming the space clogged with the grasses can be prevented.

A reinforcement frame 201 as an example of a reinforcement member is supported by the bottom portion of the collector 14. The reinforcement frame 201 includes first frames 202 which are respectively provided at both left and right ends of the collector 14 so as to extend in the front to back direction. The first frames 202 of the embodiment are formed by a pair of left and right square pipes.

Second frames 203 are supported by the rear portions of the first frames 202. The second frames 203 of the embodiment are formed by a pair of front and rear square pipes extending in the left and right direction (the vehicle width direction). That is, the second frames 203 of the embodiment are formed by two square pipes extending along the rear bottom surface 14b of the collector 14.

Additionally, in the reinforcement frame 201 of the embodiment, the first frame 202 is supported by the rotation arm 19f at a position corresponding to a position between the second frames 203. That is, two second frames 203 are disposed so as to correspond to positions that need high strength due to the load applied from the rotation arm 19f.

A third frame 204 is supported by the front portion of the first frame 202. The third frame 204 of the embodiment extends in the left and right direction and extends along the front concave portion 50 of the collector 14. The third frame 204 of the embodiment is formed in a shape conforming the shape of the front bottom surface of the collector 14 by forming an end 204a conforming the end accommodation unit 51, a center portion 204b conforming the concave portion 50, and an inclined portion 204c connecting the end 204a and the center portion 204b through the welding of the combination of the square pipe and the plate.

Thus, the reinforcement frame 201 of the embodiment can reinforce the strength of the front portion of the collector 14 while preventing the interference with the radiator 13 through the third frame 204 following the concave portion 50.

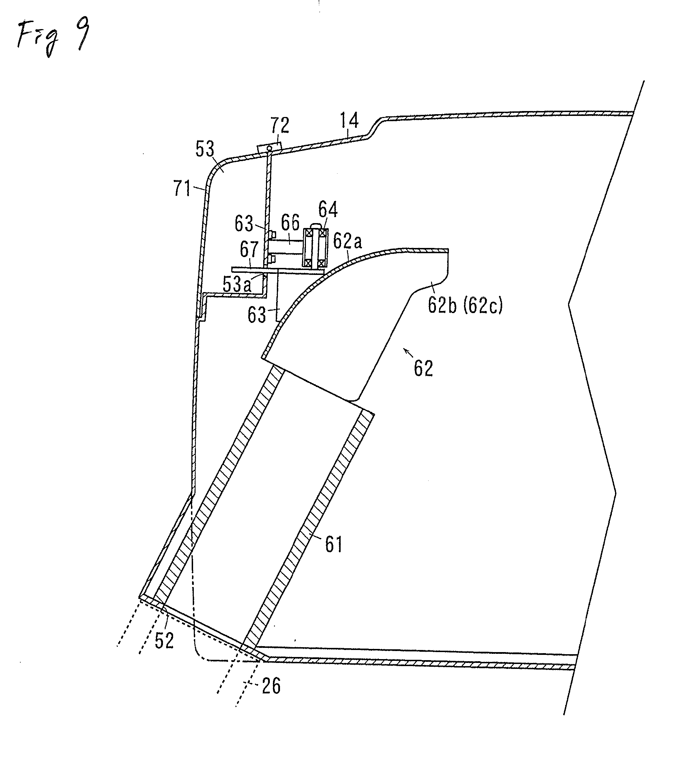

Fig. 9 is a cross-sectional view of a main part of the collector.

In Figs. 8 and 9, a connection port 52 connected to the duct 26 as an example of a carriage path is provided at a position close to the right side of the front end in the bottom portion inside the collector 14. The bottom surface of the collector 14 is inclined upwardly as it goes forwardly so as to be connected to the duct 26 in the vicinity of the connection port 52. Additionally, the duct 26 is connected to or separated from the connection port 52 when the collector 14 shown in Figs. 1 and 3 is elevated.

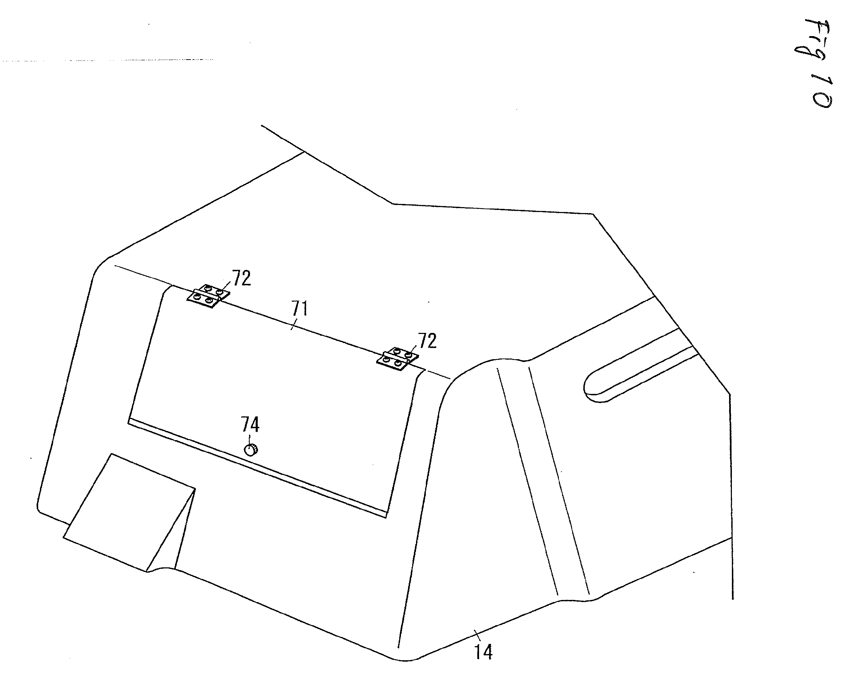

Fig. 10 is a diagram illustrating the front end of the collector of the embodiment.

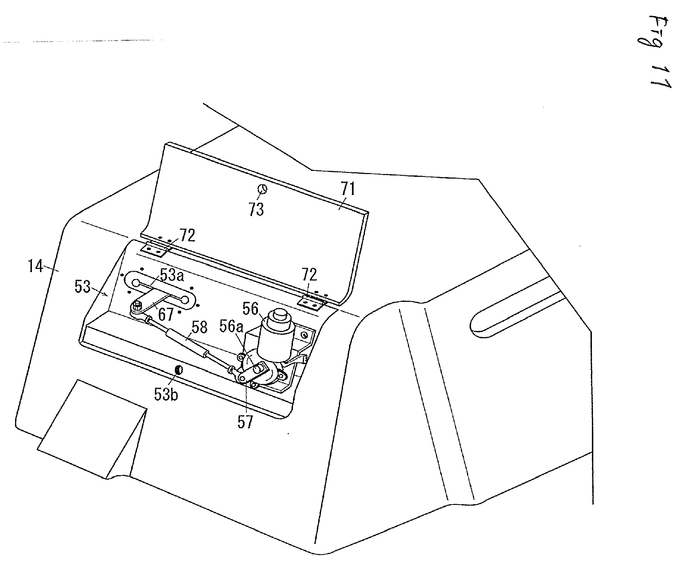

Fig. 11 is a diagram illustrating a state where the cover is opened in addition to the state shown in Fig. 10.

In Figs. 9 to 11, a motor installation portion 53 which is recessed backwardly with respect to the front surface is provided as an example of a concave portion to be provided with a drive source above the connection port 52.

In Fig. 9, a slit 53a extending in the left and right direction as an example of a passage portion is provided at the right portion of the motor installation portion 53. Further, a screw hole 53b is provided at the lower end of the center portion of the motor installation portion 53 in the left and right direction.

A motor unit 56 as an example of a drive source is fixed and supported by the motor installation portion 53. A base end of a transmission arm 57 as an example of a first transmission member is rotatably supported by an output shaft 56a of the motor unit 56. A base end of a swing rod 58 extending rightward as an example of a second transmission member is rotatably supported by the front end of the transmission arm 57.

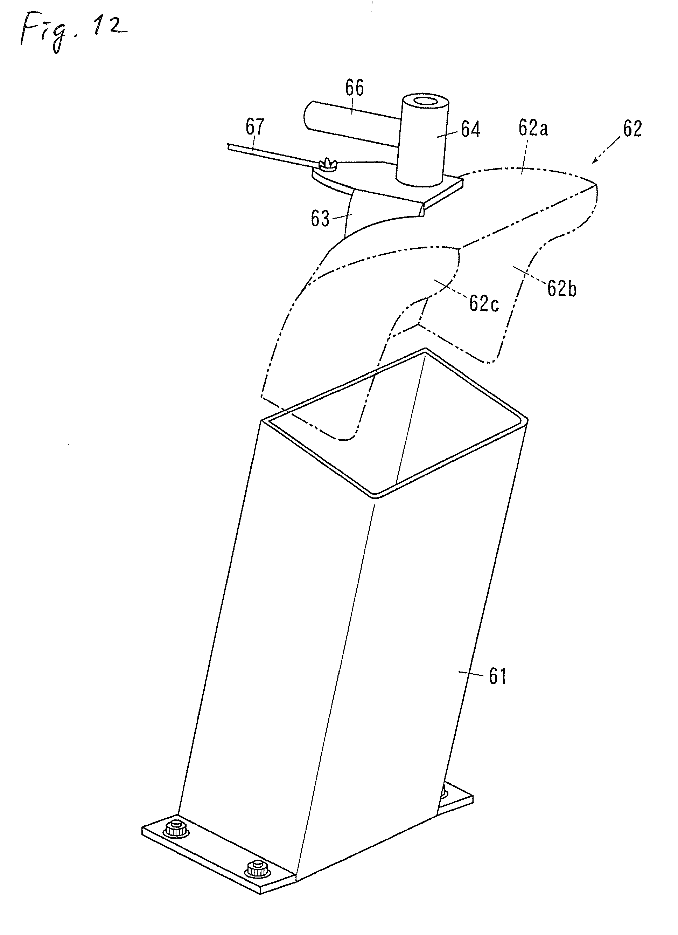

Fig. 12 is a perspective view of an eject tube and a scattering member.

In Fig. 9, a lower end of a square eject tube 61 is supported by the connection port 52. The eject tube 61 extends along the extension line of the duct 26.

A scattering plate 62 as an example of a scattering member is disposed above the eject tube 61. The scattering plate 62 includes a body 62a which is curved backwardly as it goes upwardly on the extension line of the eject tube 61 and side walls 62b and 62c which are formed at both left and right ends of the body 62a. A connection plate 63 as an example of a connection portion is supported by the upper portion of the body 62a. The rear portion of the connection plate 63 is rotatably supported by a shaft portion 64 extending upwardly. The shaft portion 64 is fixed and supported to the inner surface of the motor installation portion 53 by a fixed arm 66 extending forwardly. Thus, the scattering plate 62 is supported by the eject tube 61 so as to be rotatable about the shaft portion 64.

A base end of a plate-shaped connection arm 67 extending forwardly is rotatably supported by the front end of the connection plate 63. In Figs. 9 and 11, the front end of the connection arm 67 passes through the slit 53a so as to extend to the motor installation portion 53, and the front end of the swing rod 58 is rotatably supported by the front end of the connection arm 67.

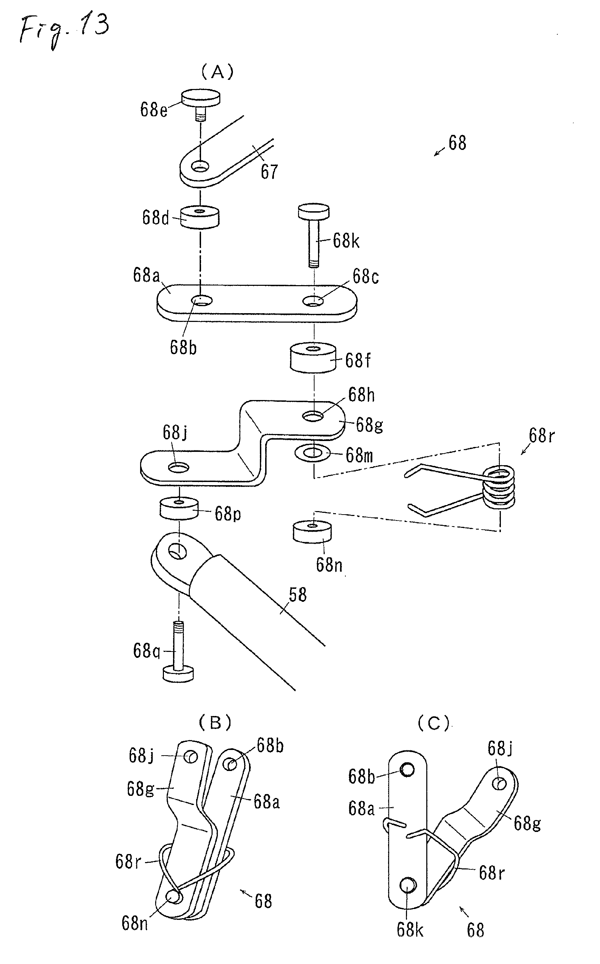

Fig. 13 is a diagram illustrating a motor lock prevention mechanism of the embodiment, where Fig. 13(A) is an exploded diagram, Fig. 13(B) is a diagram illustrating a state where the scattering member is not stopped, and Fig. 13(C) is a diagram illustrating a state where the scattering member is stopped.

In Fig. 13, a motor lock prevention mechanism 68 is provided at the connection portion between the connection arm 67 and the swing rod 58. The motor lock prevention mechanism 68 of the embodiment includes a first lock prevention plate 68a disposed near the connection arm 67. The first lock prevention plate 68a is formed in an elongated thin flat plate shape, one end is provided with a first screw hole 68b, and the other end is provided with a first penetration hole 68c. The outer end of the connection arm 67 is connected to the first screw hole 68b by a screw 68e with a spacer 68d interposed therebetween. Additionally, the outer end of the connection arm 67 is rotatably supported by the first lock prevention plate 68a.

A second lock prevention plate 68g is disposed below the first penetration hole 68c with a spacer 68f interposed therebetween. The second lock prevention plate 68g is formed in a shape in which an elongated flat plate is bent so that a step is formed therein. The second lock prevention plate 68g is provided with a second penetration hole 68h corresponding to the first penetration hole 68c, and is provided with a second screw hole 68j corresponding to the axial extension line of the first screw hole 68b.

The first lock prevention plate 68a and the second lock prevention plate 68g are connected to each other by a bolt 68k penetrating the penetration holes 68c and 68h, a washer 68m, and a nut 68n. Additionally, the lock prevention plates 68a and 68g are connected to each other so as to be rotatable about the penetration holes 68c and 68h. The front end of the swing rod 58 is rotatably connected to the second screw hole 68j by a screw 68q with a spacer 68p interposed therebetween.

Then, a coil spring 68r is supported between the washer 68m and the nut 68n. As shown in Fig. 13(B), both ends of the coil spring 68r are supported so that two lock prevention plates 68a and 68g are interposed in an overlapping state. Thus, as shown in Fig. 13(B), two lock prevention plates 68a and 68g are held in an overlapping state by the spring force of the coil spring 68r.

In Figs. 9 to 11, when the motor unit 56 is operated so as to rotate the output shaft 56a, the rotation is converted into a reciprocating motion in the left and right direction by the transmission arm 57 and the swing rod 58. Then, the connection arm 67 connected to the swing rod 58 moves left and right in the reciprocating motion, and the connection arm 67 swings so that the supported scattering plate 62 swings left and right about the shaft portion 64. That is, the driving of the motor unit 56 is transmitted to the scattering plate 62 by link mechanisms 57, 58, and 67, as an example of a transmission member, formed by the transmission arm 57, the swing rod 58, and the connection arm 67. Additionally, at this time, the motor lock prevention mechanism 68 is held in the state shown in Fig. 13(B) by the spring force of the coil spring 68r so that the swing rod 58 and the connection arm 67 move left and right in the reciprocating motion together.

Thus, the grasses carried into the collector 14 through the eject tube 61 are scattered left and right by the scattering plate 62 swinging left and right. If the scattering plate is not provided, the grasses are ejected and accumulated into a specific position inside the collector 14 so that a so-called dead space in which the grasses are not accommodated is formed in the collector 14. However, in the embodiment, since the scattering plate 62 disperses the grasses in the collector 14, the formation of the dead space is suppressed. Thus, the accommodation space of the collector 14 is effectively used, as compared with a case where the scattering plate 62 is not provided, and hence the grass accommodation amount increases. Particularly, the collector 14 of the embodiment can efficiently accumulate the grasses even in the left and right end accommodation units 51 by the scattering plate 62, and hence can effectively use the capacity.

Further, in the embodiment, a cover 71 as an example of a driving check open/close member is disposed at the front side of the motor installation portion 53. The cover 71 of the embodiment is supported by a hinge 72 at the upper end thereof so as to be openable and closeable between a cover position as an example of a covering position shown in Fig. 10 and an open position as an example of an exposing position shown in Fig. 9. The lower end of the cover 71 is provided with a screw penetration hole 73 corresponding to the screw hole 53b of the motor installation portion 53. Thus, the cover 71 located at the cover position can be fixed to the cover position by a screw 74 penetrating the screw penetration hole 73 so as to be fixed to the screw hole 53b by threading. Thus, the cover 71 can be opened and closed when a worker removes the screw 74. Additionally, a configuration has been exemplified in which the cover 71 of the embodiment can be opened and closed by the hinge 72, but the invention is not limited thereto. For example, the cover 71 may be formed as a plate removable from the motor installation portion 53 and the plate may be fixed to the motor installation portion at four corners of the plate by threading. Meanwhile, the cover 71 may be removed from the motor installation portion 53 by separating the screws so that the motor installation portion 53 is exposed to the outside. In this way, the motor installation portion may be hidden or exposed to the outside.

Thus, in the riding grass mowing machine 1 of the embodiment, the motor unit 56 or the outer ends of the transmission arm 57, the swing rod 58, and the connection arm 67 are disposed at the outside of the front portion of the collector 14 as the outside of the collector 14 instead of the inside of the collector 14 accommodating the grasses. Consequently, in the configuration of the related art in which the motor unit 56 or the link mechanisms 57, 58, and 67 are disposed inside the collector 14, a problem arises in that the grasses are entangled with the motor unit 56 and the like so that the operation is disturbed. However, in the embodiment in which the motor unit 56 and the like are disposed outside the collector 14, it is possible to prevent the grasses from being entangled with the motor unit 56 and the like.

Further, in the embodiment, the worker can check the states of the motor unit 56 or the link mechanisms 57, 58, and 67 by opening the cover 71 located at the rear side of the seat 11. When the operation of the scattering plate 62 is stopped due to the clogging grasses or the like, the connection arm 67 of the link mechanisms 57, 58, and 67 does not swing. Thus, it is possible to easily check whether the scattering plate 62 is stopped due to the clogging with grasses or the like, that is, the scattering plate 62 is normally operated just by opening and closing the cover 71, as compared with the configuration of the related art in which the motor unit 56 and the like are provided inside the collector 14.

Further, in the embodiment, since the motor unit 56 is provided outside the collector 14, the motor unit 56 or the transmission arm 57 and the swing rod 58 can be assembled or adjusted from the outside of the collector 14. That is, in the configuration of the related art in which the motor unit 56 is provided inside the collector, the motor unit or the link mechanisms need to be assembled or adjusted inside the collector 14. On the contrary, in the embodiment, the operation can be easily performed, as compared with the related art.

Further, in the embodiment, since the motor unit 56 or the link mechanisms 57, 58, and 67 are covered while the cover 71 is closed, it is possible to prevent a problem in which the motor unit 56 and the like are damaged by rain or flying stone or the worker contacts the motor unit 56 and the like by mistake.

Additionally, when the scattering plate 62 is stopped so that the connection arm 67 does not swing left and right, the first lock prevention plate 68a cannot swing left and right. Meanwhile, as the motor unit 56 rotates, the swing rod 58 and the second lock prevention plate 68g may swing left and right. If the connection arm 67 is stopped without the motor lock prevention mechanism 68, that is, the connection arm 67 and the swing rod 58 are directly connected to each other, the swing rod 58 is also stopped. Accordingly, due to the excessive torque given by the link mechanisms 57, 58, and 67, the motor unit 56 cannot be rotated in spite of the situation where the motor unit 56 is driven. That is, it becomes a so-called motor lock state. In the motor lock state, there is a concern that the motor unit 56 may be burned by the heat thereof generation, which brings about a motor break-down. If a safety device such as a torque limiter is provided in the motor unit in order to prevent the motor lock state, the motor unit increases in size and length in the drive shaft direction, which causes a problem of an increase in cost. On the contrary, in the embodiment, the second lock prevention plate 68g can rotate with respect to the first lock prevention plate 68a within the extensible range of the coil spring 68r as shown in Fig. 13(C) even when the first lock prevention plate 68a is stopped, and hence the reciprocating motion of the swing rod 58 in the left and right direction is allowed. Thus, the motor unit 56 is protected without the motor lock state. Accordingly, it is possible to prevent the motor lock state by a compact and low-cost configuration using the motor lock prevention mechanism 68 of the embodiment, as compared with the case in which the safety device is provided. Additionally, it is desirable to provide the motor lock prevention mechanism 68. However, a safety device such as a torque limiter may be employed.

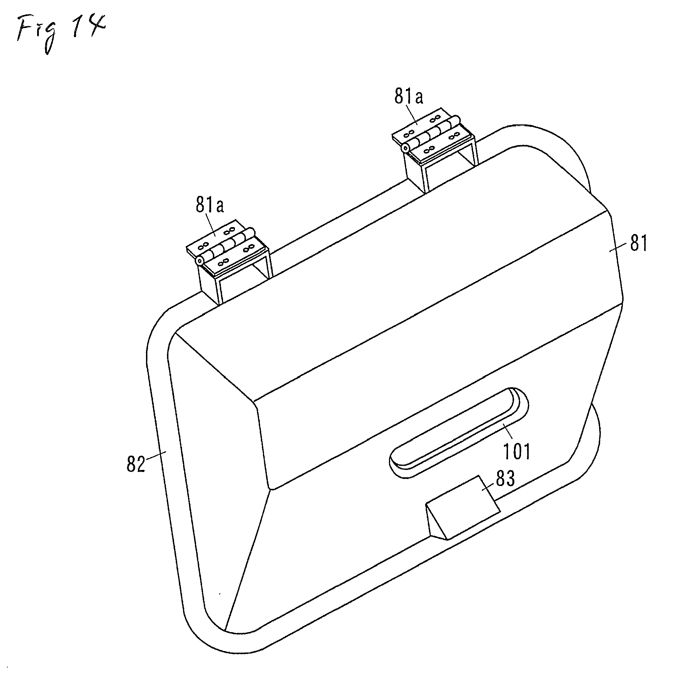

Fig. 14 is a diagram illustrating a door of the collector of the embodiment.

In Figs. 1, 3, and 4, an exhaust port 77 is formed in a rear end wall 76 of the collector 14 of the embodiment so as to penetrate the rear end wall in the front and back direction. The exhaust port 77 is formed so as to enable the air suctioned into the collector 14 therethrough to be ejected. Additionally, a mesh-shaped member (not shown) is supported on the inside of the exhaust port 77 so that the grasses do not leak therefrom.

A door 81 as an example of a grass eject open/close member is disposed below the exhaust port 77 in the collector 14. In Figs. 1, 3, 4, and 14, the door 81 is supported by the body of the collector 14 at the upper end thereof so as to be openable and closable by a hinge 81a.

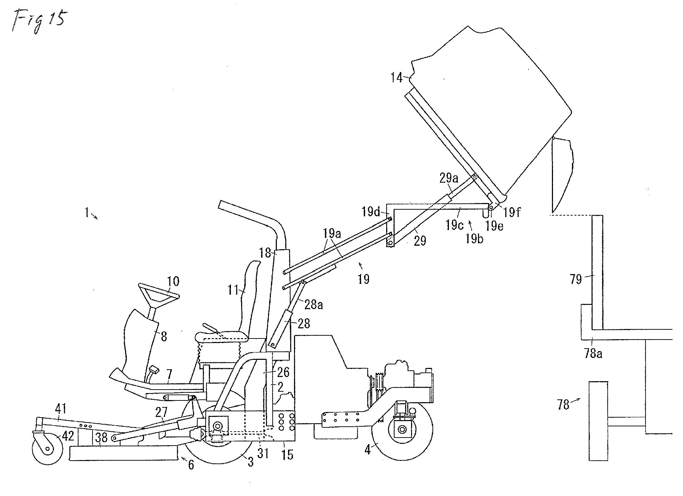

Fig. 15 is a diagram illustrating a case where the grasses accommodated in the collector are ejected to a cargo of a truck.

Here, if the height of the lower end of the door 81 is low when the door 81 is opened so as to directly eject the grasses accommodated in the collector 14 to a cargo 78a of a truck 78, the grasses cannot be ejected to the cargo 78a since the lower end of the door cannot be higher than the height of a fence 79 provided so as to surround the cargo 78a of the truck 78. On the contrary, in the door 81 of the embodiment, the length of the rotation portion is shortened, as compared with the configuration of the related art in which the exhaust port 77 is provided in the door 81 and the door is rotatably supported by the upper end of the collector 14 through the hinge 81a. Thus, the height of the lower end of the door 81 becomes higher when the door is opened. Thus, the height of the lower end of the door 81 easily becomes higher than the height of the upper end of the fence 79, and hence the grasses can be easily ejected to the cargo 78a. Further, even when the grasses are not ejected to the cargo 78a but are piled on a flat grass storage site, it is possible to increase the height of the grass piled place by increasing the height of the lower end of the door 81 and thus to pile more grasses.

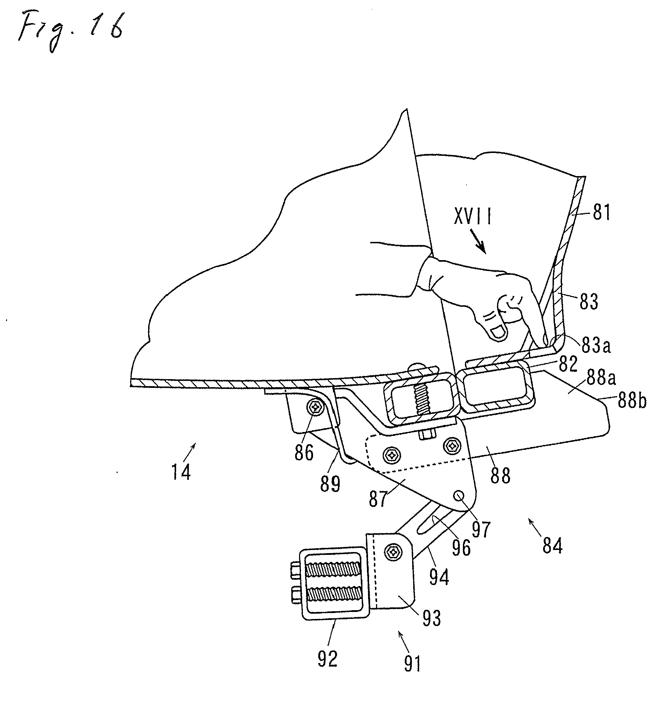

Fig. 16 is a diagram illustrating a door lock mechanism of the collector of the embodiment.

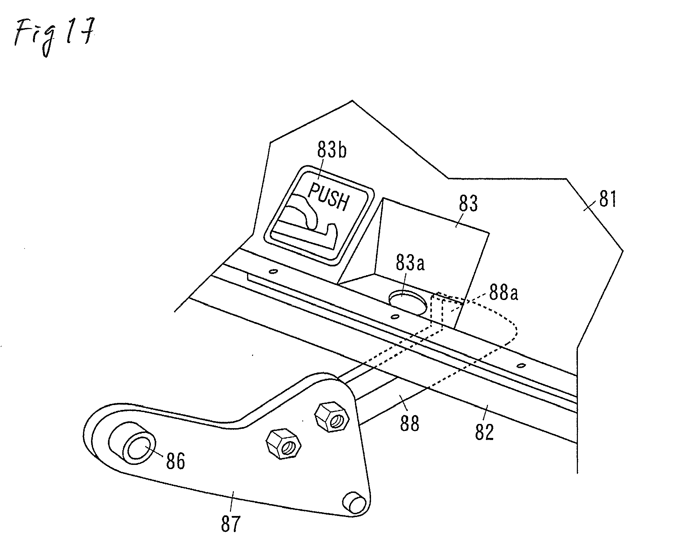

Fig. 17 is a diagram when viewed from the arrow XVII of Fig. 16.

In Figs. 14, 16, and 17, a square pipe-shaped door frame 82 is fixed and supported to the outer periphery of the door 81 of the embodiment. An outwardly swollen lock release portion 83 as an example of a lock release portion is formed at the lower end of the center portion of the door 81 in the left and right direction. A lock release port 83a corresponding to a human finger size is formed in the bottom surface of the lock release portion 83. In Fig. 17, a safety label 83b that notifies the lock releasable state is stuck to the vicinity of the lock release portion 83.

In Figs. 16 and 17, a lock mechanism 84 as an example of a locking member is disposed on the lower surface of the collector 14. The lock mechanism 84 includes a rotation shaft portion 86 supported by the lower surface of the collector 14. A base end of a lock arm 87 extending backwardly is supported by the rotation shaft portion 86 so as to be rotatable about the rotation shaft portion 86. A lock plate 88 extending backwardly is supported by the rear portion of the lock arm 87. A claw portion 88a protruding upwardly is formed at a position corresponding to the rear end surface of the door frame 82 in the rear end of the lock plate 88. The upper surface of the rear end of the claw portion 88a is provided with a guide surface 88b used to rotate the lock plate 88 downwardly while contacting the door frame 82 of the door 81 when the door 81 is closed. Additionally, the lock release port 83a of the embodiment is disposed at a position corresponding to the upside of the lock plate 88.

Further, a coil spring 89 generating a force of pressing the claw portion 88a upwardly is supported by the rotation shaft portion 86, one end of the coil spring 89 contacts the lower surface of the collector 14, and the other end thereof contacts the lock arm 87.

Further, a toggle mechanism 91 as an example of a holding mechanism is disposed below the lock arm 87. The toggle mechanism 91 includes a toggle fixing portion 93 fixed to a connection bar 92 connecting the pair of left and right horizontal portions 19c to each other. A base end of a toggle link 94 is rotatably supported by the toggle fixing portion 93. The front end side of the toggle link 94 is provided with an elongated hole 96 extending in the longitudinal direction of the toggle link 94. A pin 97 supported by the rear lower end of the lock arm 87 penetrates the elongated hole 96.

Thus, in the embodiment, when the door 81 is closed, the claw portion 88a of the lock plate 88 is caught by the door frame 82 through the coil spring 89 so that the door 81 is held (locked) in a closed state. Here, when the door is locked while the worker stays in the collector 14 in order to clean the inside of the collector 14 or to check the scattering plate 62 or the like, the worker is confined therein unless a person waiting outside the collector 14 releases the lock state in the configuration of the related art in which the lock release portion 83 is not provided. Thus, there is a need to ensure a person waiting outside the collector when a person enters the collector 14. As a result, a problem arises in that two or more persons need to be ensured. On the contrary, in the embodiment, when the worker staying in the collector wants to move out, the worker can simply release the lock state by pressing the claw portion 88a while inserting a finger through the lock release port 83a of the lock release portion 83, and hence the worker can move out by opening the door 81. Thus, even when two or more persons are not ensured, the worker can freely enter the collector 14.

Additionally, there is little need to worry that the grasses are blown by the air suctioned by the blower 23 and the collected grasses leak to the outside in the lock release port 83a having a size of about the human finger.

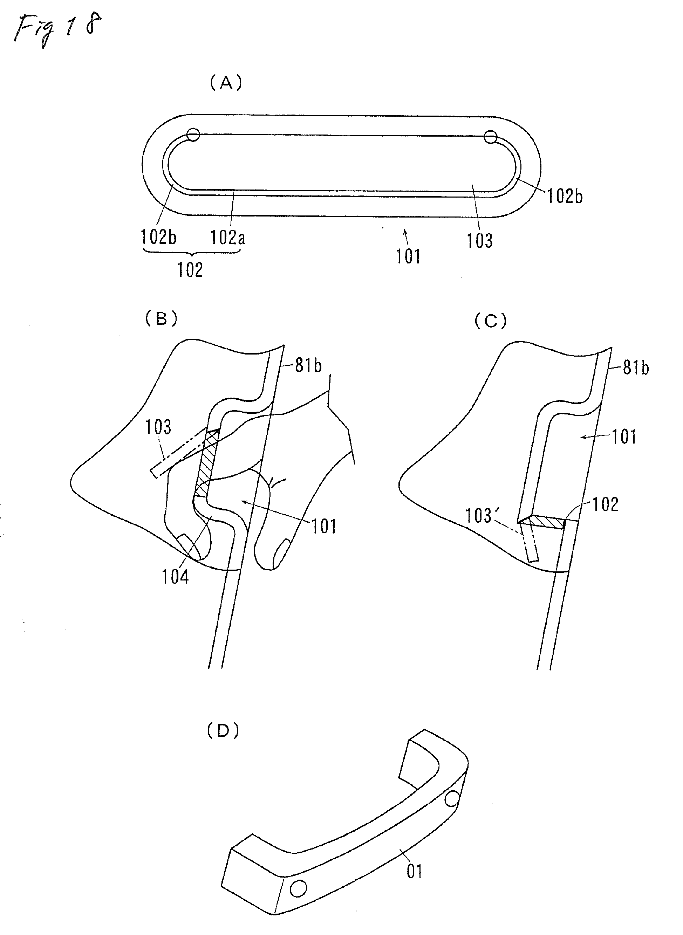

Figs. 18(A) to 18(D) are diagrams illustrating a door grip portion of the embodiment, where Fig. 18(A) is a front view, Fig. 18(B) is a cross-sectional view, Fig. 18(C) is a cross-sectional view of another example, and Fig. 18(D) is a diagram illustrating a grip of the related art.

In Figs. 14, 18(A), and 18(B), a door grip 101 as an example of a grip portion is formed above the lock release portion 83 in the door 81 of the embodiment. As shown in Fig. 18(B), the door grip 101 of the embodiment is formed to be recessed from the rear surface 81b of the door 81. Then, a slit 102 is formed in the inner recessed surface so as to penetrate the door 81. The slit 102 includes a horizontal slit portion 102a which extends in the left and right direction along the lower end of the door grip 101 and a semi-circular slit portion 102b which extends from both left and right ends of the horizontal slit portion 102a so as to have a semi-circular shape thereabove. Thus, the door grip 101 includes a lid portion 103 which is rotatable about the upper end without the slit 102.

Thus, in the door grip 101 of the embodiment, the lid portion 103 rotates when the worker presses the lid portion 103 by a finger. Thus, the worker can open and close the door 81 by hooking a finger to a lower step portion 104 of the door grip 101 on the inner surface side of the collector 14. Additionally, in the embodiment, the collector 14 is formed of resin in order to decrease the weight thereof. When the worker pulls a finger out of the door grip 101, the lid portion 103 returns to an original state due to the elastic restoration force of the resin while rotating about the upper end thereof.

In Fig. 18(D), a door grip 01 of the related art is provided so that the grip 01 is fixed to the outer surface of the door 81, and is provided as a separate component protruding from the outer surface. Due to the grip 01 as the separate component, the weight of the door 81 increases and the number of components increases. As a result, the cost increases. On the contrary, in the embodiment, the door grip 101 can be realized just by forming the slit 102, and hence a decrease in weight and cost can be realized, as compared with the configuration of the related art. Further, the door grip 101 does not protrude outwardly from the outer surface of the door 81, and hence the door can be provided in a compact size as a whole.

Further, in the door grip 101 of the embodiment, the lid portion 103 returns to an original state due to the elastic restoration force. If an opening is formed by cutting the entire lid portion 103, there is a concern that the grasses may be blown from the opening when the grasses are suctioned into the collector 14 by the blower 23. On the contrary, in the embodiment, the lid is formed by the lid portion 103, and hence the grass blowing amount is decreased, as compared with a case where an opening is formed in the lid portion.

In Fig. 18(C), as another example, a lid portion 103' can be formed in the lower surface instead of the inner recessed portion of the door grip 101. Even in the configuration shown in Fig. 18(C), a decrease in weight, cost, and size can be realized similarly to the configuration shown in Fig. 18(B). Further, the grass blowing amount can be decreased.

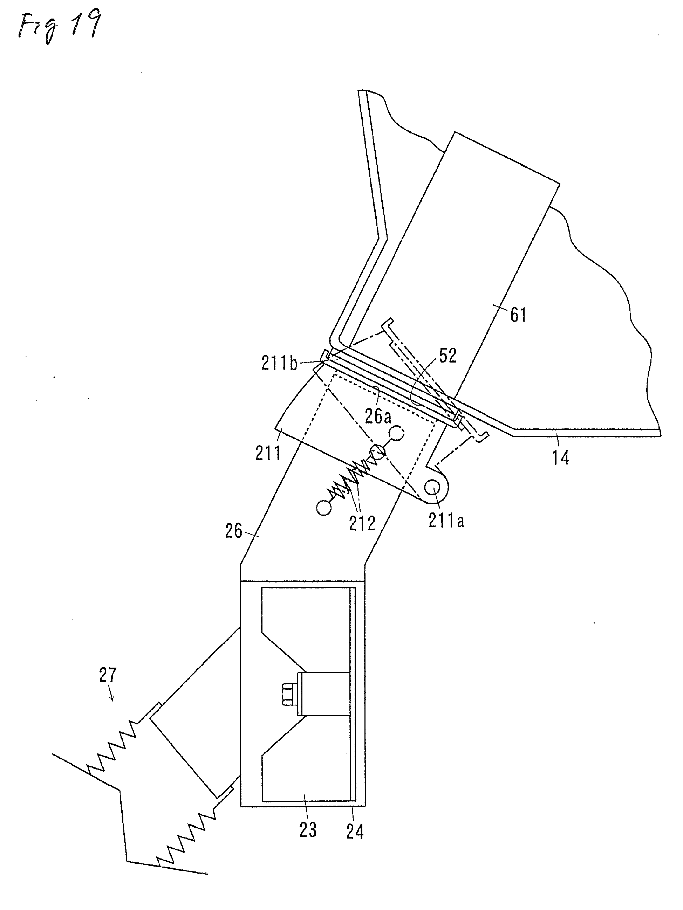

Fig. 19 is a diagram illustrating a main part of a connection portion between the duct and the connection port of the embodiment.

Additionally, a coupling tube 211 as an example of a coupling member is supported by the upper end of the duct 26 of the embodiment. The coupling tube 211 is supported so as to be rotatable about a rotation center 211a of the rear end of the duct 26. Thus, the coupling tube 211 moves between a coupling position (a position indicated by the solid line in Fig. 19) in which a coupling surface 211b of the upper end thereof moves close to an upper end surface 26a of the duct 26 in a parallel state and a receiving position (a position indicated by the one-dotted chain line in Fig. 19) in which the coupling surface 211b of the coupling tube 211 protrudes upwardly in relation to the upper end surface 26a of the duct 26. Additionally, the coupling tube 211 is formed in a cylindrical shape having an inner surface greatly larger than the outer surface of the duct 26.

Further, a spring 212 as an example of an elastic member is supported between the duct 26 and the coupling tube 211. The spring 212 generates a force of pressing the coupling tube 211 toward the receiving position.

The track in which the connection port 52 is separated from the upper surface of the duct 26 during the elevation of the collector 14 does not match the extension direction of the duct 26. Thus, in the configuration of the related art in which the coupling tube 211 is not provided, abrasion occurs due to the rubbing between the lower surface of the connection port 52 and the upper surface of the duct 26. Thus, there is a concern that a gap may be formed in time between the connection port 52 and the duct 26 so that air or grasses leak therethrough. If a component is replaced when the lower surface of the connection port 52 or the upper surface of the duct 26 is abraded, the entire collector 14 or the entire duct 26 needs to be replaced in the configuration of the related art, and hence a problem that cost increases arises.

On the contrary, in the embodiment, the movement track of the coupling tube 211 can approach the movement track of the connection port 52 during the elevation of the collector 14, as compared with a case where the coupling tube 211 is not provided. Thus, it is possible to reduce the abrasion between the lower surface of the connection port 52 and the coupling surface 211b of the coupling tube 211. Further, even when a component is replaced due to the temporal abrasion, only the coupling tube 211 is replaced since the coupling tube 211 is formed of a material easily abraded, as compared with the connection port 52, and hence an increase in cost can be suppressed.

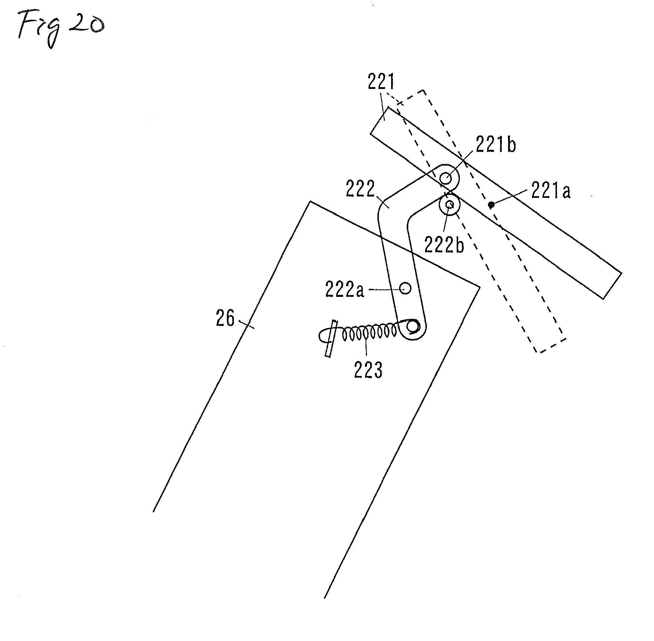

Fig. 20 is a diagram illustrating a main part of another example of the connection portion between the duct and the connection port of the embodiment.

In the embodiment shown in Fig. 20, a square frame-shaped coupling tube 221 as an example of a coupling member is provided instead of the coupling tube 211. The coupling tube 221 is supported by a rotation arm 222.

The rotation arm 222 is supported by the duct 26 so as to be rotatable about a rotation center 222a. The coupling tube 221 is rotatably supported by the front end of the rotation arm 222. Thus, the coupling tube 221 is supported so as to be movable between a coupling position in which the coupling tube 221 moves close to the upper end surface of the duct 26 and a receiving position in which the coupling tube 221 moves so as to be separated upwardly from the upper end surface of the duct 26.

Additionally, the coupling tube 221 is set so that the position of the support point 221b supported by the rotation arm 222 is located at the front position with respect to a gravity center 221a of the coupling tube 221. Thus, the coupling tube 221 is set so that the rear end thereof is inclined downwardly by the own weight. A stopper 222b which contacts the coupling tube 221 so as to set an inclination angle is supported by the front end of the rotation arm 222. Additionally, in the embodiment, the inclination angle of the coupling tube 221 set by the stopper 222b is set as an angle corresponding to the inclination angle obtained when the connection port 52 of the collector 14 contacts the coupling tube 221.

A spring 223 is supported by the lower end of the rotation arm 222. The spring 223 generates a force of pulling the rotation arm 222 forwardly, that is, a force of moving the coupling tube 221 toward the receiving position.

In the embodiment shown in Fig. 20, the movement track of the coupling tube 221 approaches the movement track of the connection port 52 during the elevation of the collector 14 similarly to the embodiment shown in Fig. 19, and hence the abrasion can be reduced. Particularly, the coupling tube 221 is rotatably supported by the rotation arm 222, and the collector 14 can be moved upwardly along with the connection port 52 while contacting the connection port even when the collector starts moving upwardly. Accordingly, the coupling tube 221 and the connection port 52 are easily separated from each other without any rubbing in the surface direction.

Further, the coupling tube 221 is inclined by the own weight at an angle in which the connection port 52 is easily received when the collector 14 moves downwardly. Thus, even when the collector 14 moves downwardly, the connection port 52 and the coupling tube 221 contact each other without any deviation in the surface direction, and easily move together until the connection port and the coupling tube are coupled to the upper end of the duct 26.

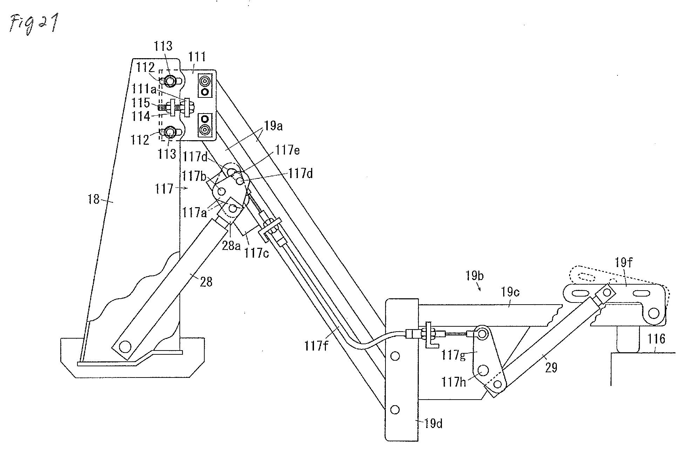

Fig. 21 is an enlarged view of a main part of the collector elevation mechanism of the embodiment.

In Fig. 21, in the collector elevation mechanism 19 of the embodiment, the base ends of the collector elevation links 19a and 19a are supported by the support columns 18 and 18 through an adjustment plate 111 as an example of a target guide member. The adjustment plate 111 is formed in a plate shape, and the base ends of the collector elevation links 19a and 19a are rotatably supported by the rear end of the adjustment plate. A first bolt support portion 111a which rises outwardly in the left and right direction is supported by the center portion of the adjustment plate 111 in the front to back direction.

Each of the support columns 18 and 18 is provided with a pair of upper and lower elongated holes 112, as an example of a guide portion, extending in the front to back direction. The adjustment plate 111 is supported so as to be movable in the front to back direction by a screw 113 penetrating the elongated hole 112. Further, a second bolt support portion 114 which rises outwardly in the left and right direction is formed at each of front facing positions of the bolt support portion 111a in the support columns 18 and 18. Each of the bolt support portions 111a and 114 is provided with a penetration hole, and a bolt 115 as an example of an adjustment member is supported by the penetration hole through a nut. Thus, when the gap between the bolt support portions 111a and 114 is adjusted by tightening or loosening the bolt 115, the positions of the adjustment plate 111 and the collector elevation links 19a and 19a can be adjusted with respect to the support column 18 in the front to back direction. Thus, the position of the collector 14 supported by the collector elevation links 19a and 19a in the front to back direction can be adjusted.

Due to the assembling/disassembling operation in manufacture or maintenance or the deterioration in time, a positional deviation may occur between the eject tube 61 and the duct 26 or a positional deviation may occur between the rear end of the elevation seat 19b and a collector receiving portion 116 behind the engine 12. In this case, the position can be adjusted by the bolt 115, and hence the positional deviation can be addressed.

Further, in Fig. 21, a minute dump mechanism 117 is assembled to the collector elevation mechanism 19 of the embodiment. The minute dump mechanism 117 includes a first crank plate 117a as an example of the connection member.

The first crank plate 117a is formed in a substantially right angled triangular plate shape. The first crank plate 117a is supported by a projection portion 117c protruding toward the downside of the elevation link 19a so as to be rotatable about a rotation center 117b of a right-angle portion of a right angled triangular shape. Further, the rod 28a of the elevation cylinder 28 is rotatably connected to one corner portion of the first crank plate 117a. Furthermore, a pin 117d is supported by the remaining corner portion of the first crank plate 117a. The pin 117d is supported so as to be movable along an elongated stopper hole 117e formed in the elevation link 19a. Further, one end of a connection cable 117f is supported by the pin 117d.

The other end of the connection cable 117f is connected to an upper end of a second crank plate 117g as an example of a connection member. The second crank plate 117g is supported by the elevation seat 19b so as to be rotatable about a rotation center 117h of a center portion. The base end of the rotation cylinder 29 is rotatably supported by the right lower end of the second crank plate 117g.

Thus, in the minute dump mechanism 117 of the embodiment, when the elevation cylinder 28 starts operating so as to extend the rod 28a, the first crank plate 117a starts rotating before the collector elevation link 19a starts moving upwardly. When the first crank plate 117a rotates, the second crank plate 117g starts rotating through the connection cable 117f. Thus, the base end of the rotation cylinder 29 which is not lengthened and shortened is obliquely pressed upwardly, and the collector 14 is slightly moved upwardly by the rotation of the rotation arm 19f. Thus, the eject tube 61 and the duct 26 are separated from each other.

Then, when the pin 117d contacts the upper end of the elongated stopper hole 117e so as not to be movable any more, the first crank plate 117a cannot rotate any more. When the rod 28a of the elevation cylinder 28 is lengthened from this state, the collector elevation link 19a starts moving upwardly. Thus, the current state changes to the state shown in Fig. 3 as described above.

Thus, in the configuration of the related art in which the collector 14 starts moving upwardly without the rotation of the collector 14, the extension direction of the eject tube 61 and the duct 26 does not match the movement track of the collector 14, and hence rubbing occurs in the coupling surface between the eject tube 61 and the duct 26. Thus, the coupling surface is abraded in time. Accordingly, there is a concern that air or grasses leak from the coupling portion. On the contrary, in the embodiment, since the collector 14 slightly rotate so as to separate the coupling portion before the collector 14 starts moving upwardly, the abrasion of the coupling surface can be reduced.

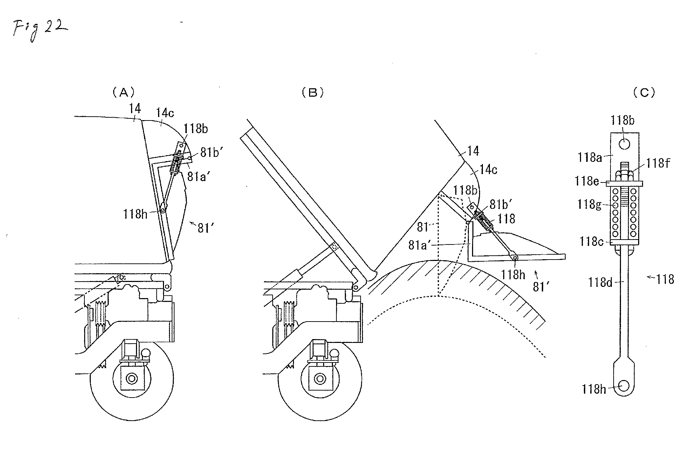

Fig. 22 is a diagram illustrating another example of the embodiment for the door of the collector corresponding to Fig. 15, where Fig. 22(A) is a diagram illustrating a state where the door is closed, Fig. 22(B) is a diagram illustrating a state where the door is opened, and Fig. 22(C) is a diagram illustrating a drawing rod.

In another example of the embodiment shown in Fig. 22, a door 81' of the collector 14 is formed in a shape (an L-shape in the side view) of which the upper end is bent backwardly, as compared with the door 81 shown in Fig. 15. Accordingly, the rear end of the collector 14 also protrudes backwardly, as compared with the configuration shown in Fig. 15.

Then, a rotation center 81b' of a front end of a bent portion 81a' is rotatably supported by a rear end 14c protruding outwardly from the collector 14.

Further, a drawing rod 118 as an example of an auxiliary opening/closing member is disposed at both left and right ends of the collector 14. The drawing rod 118 includes a fixed plate 118a as an example of a fixed portion. A base end 118b of the fixed plate 118a is rotatably supported by a rear end 14c of the collector 14. The front end of the fixed plate 118a is provided with a stopper plate 118c rising with respect to the fixed plate 118a. The stopper plate 118c is provided with a penetration hole (not shown), and a rod body 118d is disposed so as to penetrate the penetration hole. A washer 118e facing the stopper plate 118c is disposed at the base end of the rod body 118d. A screw is formed in the base end of the rod body 118d, and a spring force adjusting nut 118f is supported by the screw portion. A spring 118g is disposed between the stopper plate 118c and the washer 118e. The spring 118g of the embodiment generates a force of separating the washer 118e from the stopper plate 118c. A front end 118h of the rod body 118d is rotatably supported by the door 81. Additionally, the drawing rod 118 of the embodiment is formed so that the rotation center (the support point) 81b' of the door 81' is located at the rear side in the extension direction of the drawing rod 118 while the door 81' is closed as shown in Fig. 22(A) and the rotation center (the support point) 81b' of the door 81' is located at the front side in the extension direction of the drawing rod 118 while the door 81' is opened as shown in Fig. 22(B). That is, the front end 118h of the rod body 118d is set so as to pass over a so-called dead point in which the rotation center 81b' of the door 81' and the base end 118b of the fixed plate 118a are arranged in a straight line while the door 81' is opened and closed.

Thus, in the embodiment, a force of keeping the closed state of the door 81' is generated by the elastic force of the spring 118g while the door 81' is closed, and hence a case in which the door 81' is opened by mistake during the mowing operation is suppressed from occurring. Further, when the collector 14 moves upwardly and rotates so that the door 81' is opened halfway so as to exceed the dead point due to the weight of the grasses inside the collector 14, the elastic force of the spring 118g acts as a force of opening the door 81'. Thus, the door 81' is opened to the state shown in Fig. 22(B), and the door 81' is kept in the opened state by the force of the spring 118g. Incidentally, in a case in which the door 81' is opened halfway so as to exceed the dead point even when the worker opens the door 81' while the collector 14 does not move upwardly, the door 81' is naturally opened by the force of the spring 118g and is kept in the opened state.

Further, the door 81' of the embodiment is formed in a shape in which the door 81a' is bent (folded) halfway, that is, a substantially L-shape. Here, the door is supported so as to be rotatable about the rotation center 81b' of the L-shaped front end. As shown in Fig. 22(B), in the halfway bent shape, the height of the lower end when the door 81' is opened can be set as the higher position, as compared with the embodiment of Fig. 15 in which the door is not bent halfway (middle-folded). Thus, the grasses can be more easily loaded on the cargo of the truck, and the height of the piled grasses can be further increased.

### [Description of Reference Numeral and Signs]

1: riding grass mowing machine (mowing machine)
2: vehicle body frame
3: front wheel
4: rear wheel
5: cutting blade
5a: rotation shaft
6: mower (mowing unit)
7: floor
8: steering column
10: handle
11: seat
12: engine
12a: hood
12b: front upper surface
12c: rear upper surface
12d: slope
12e: intake hole
12f: exhaust hole
13: radiator
13a: radiator body
13b: radiator shroud
13c: cube-shaped dust net
14: collector (accommodation unit)
14a: front bottom surface
14b: rear bottom surface
14c: rear end
15: transmission casing
16: transmission shaft
18: support column
19: collector elevation mechanism
19a: collector elevation link
19b: elevation seat
19c: horizontal portion
19d: vertical portion
19e: rotation shaft
19f: rotation arm
23: blower
24: blower casing
26: duct
26a: upper end surface
27: chute
28: elevation cylinder
28a: rod
29: rotation cylinder
29a: rod
31: mower drive shaft
32: mower transmission shaft
38: mower deck
41: auxiliary wheel arm
42: auxiliary wheel
50: concave portion
51: end accommodation unit
52: connection port
53: motor installation portion (concave portion)
53a: slit
53b: screw hole
56: motor unit (drive source)
56a: output shaft
57: transmission arm
57, 58, 67: link mechanism (transmission member)
58: swing rod
61: eject tube
61a, 61b: end wall
62: scattering plate (scattering member)
62a: body
62b: side wall
63: connection plate
64: shaft portion
66: fixed arm
67: connection arm
68: motor lock prevention mechanism
68a: first lock prevention plate
68b: first screw hole
68c: first penetration hole
68d: spacer
68e: screw
68f: spacer
68g: second lock prevention plate
68h: second penetration hole
68j: second screw hole
68k: bolt
68m: washer
68n: nut
68p: spacer
68q: screw
68r: coil spring
71: cover (open/close member)
72: hinge
73: screw penetration hole
74: screw
76: rear end wall
77: exhaust port
78: truck
78a: cargo
79: fence
81: door
81a: rear surface
81': door
81a': bent portion
81b': rotation center
82: door frame
83: lock release portion
83a: lock release port
83b: safety label
84: lock mechanism (locking member)
86: rotation shaft portion
87: lock arm
88: lock plate
88a: claw portion
88b: guide surface
89: coil spring
91: toggle mechanism
92: connection bar
93: toggle fixing portion
94: toggle link
96: elongated hole
97: pin
101: door grip (grip portion)
102: slit
102a: horizontal slit portion
102b: semi-circular slit portion
103: lid portion
103': lid portion
104: step portion
111: adjustment plate
111a: first bolt support portion
112: elongated hole
113: screw
114: second bolt support portion
115: bolt
116: collector receiving portion
117: minute dump mechanism
117a: first crank plate
117b: rotation center
117c: projection portion
117d: pin
117e: elongated stopper hole
117f: connection cable
117g: second crank plate
117h: rotation center
118: drawing rod
118a: fixed plate
118b: base end
118c: stopper plate
118d: rod body
118e: washer
118f: spring force adjusting nut
118g: spring
118h: front end
201: reinforcement frame
202: first frame
203: second frame
204: third frame
204a: end
204b: center portion
204c: inclined portion
211: coupling tube
211a: rotation center
211b: coupling surface
212: spring
221: coupling tube
222: rotation arm
222a: rotation center
221a: gravity center
221b: support point
222b: stopper
223: spring

Since an accommodation unit 14 is provided with a concave portion 50 and a rear bottom surface 14b is disposed at the downside in relation to a front bottom surface 14a, the capacity of the accommodation unit 14 can be ensured while avoiding a radiator 13 protruding upwardly. Further, since the rear portion of the accommodation unit 14 is provided with a door 81 opened and closed to eject grasses therethrough and the rear bottom surface 14b is disposed at the downside in relation to the front bottom surface 14a, grasses can be satisfactorily ejected from the rear portion of the accommodation unit 14 toward the front portion thereof when the grasses are ejected.

## Claims

1. A mowing machine comprising:
a traveling vehicle body (2);
a mowing unit (6) that is disposed at the front portion of the traveling vehicle body (2);
an accommodation unit (14) that accommodates therein grasses mown by the mowing unit (6);
an engine (12) that is disposed at the rear portion of the traveling vehicle body (2); and
a radiator (13) that is disposed at the front side of the engine (12),
wherein the radiator (13) is disposed so that the upper portion protrudes upwardly in relation to the engine,
wherein the rear bottom portion of the accommodation unit (14) is located above the engine, and
wherein the front bottom portion of the accommodation unit (14) is provided with a concave portion (50) allowing the upper portion of the radiator (13) to be received thereinto.

2. The mowing machine according to claim 1, further comprising:
a pair of first left and right frames (202) that faces the bottom portion of the accommodation unit (14) and extends in the front to back direction at both left and right sides of the bottom portion of the accommodation unit;
a second frame (203) that faces the bottom portion of the accommodation unit (14) and extends in the left and right direction at the rear bottom portion of the accommodation unit so as to be connected to the first frames (202); and
a third frame (204) that faces the bottom portion of the accommodation unit (14) and extends in the left and right direction along the shape of the concave portion (50) forming the front bottom portion of the accommodation unit so as to be connected to the first frames (202).

3. The mowing machine according to claim 1 or 2,
wherein a cube-shaped dust net (13c) is provided at the front side of the radiator (13) so as to have substantially the same height as the upper portion of the radiator (13),
wherein the concave portion (50) is formed to the front end of the accommodation unit (14), and
wherein the upper portions of the radiator (13) and the cube-shaped dust net (13c) are received into the concave portion (50).
